# FASCICULE DE BREVET EUROPEEN

(11) **EP 2 697 285 B1**
(45) Date de publication et mention de la délivrance du brevet: **01.01.2020**
(21) Numéro de dépôt: 12713735.4
(22) Date de dépôt: 12.04.2012
(51) Int. Cl.: C08L 77/00, C08L 77/06, C08K 5/053

(54) **POLYAMIDE STABILISE**
STABILISIERTES POLYAMID
STABILISED POLYAMIDE

(30) Priorité: 13.04.2011 FR 1101125
(43) Date de publication de la demande: 19.02.2014
(73) Titulaire: RHODIA OPERATIONS, 93306 Aubervilliers (FR)
(72) Inventeur: JEOL, Stéphane, GA-30041 Cumming (US); BADEL, Thierry, 69008 Lyon (FR)
(74) Mandataire: Schuck, Alexander
(86) Numéro de dépôt international: PCT/EP2012/056604
(87) Numéro de publication internationale: WO 2012/140100

(56) Documents cités:
- WO-A1-2010/014790
- WO-A1-2012/140099
- WO-A2-2007/036929
- FR-A- 1 386 182
- FR-A1- 2 965 565
- FR-A5- 2 043 317
- DATABASE WPI Week 198609 Thomson Scientific, London, GB; AN 1986-059720 XP002676965, -& JP 61 012728 A (TORAY IND INC) 21 janvier 1986 (1986-01-21)

## Description

La présente invention concerne l'utilisation d'un alcool polyhydrique lors d'un procédé de polymérisation du polyamide pour conférer au polyamide modifié obtenu aune augmentation de la stabilité vis-à-vis de la chaleur.

L'invention concerne également un polyamide modifié de la sorte ainsi que des compositions polyamides utilisables pour la réalisation d'articles spécifiques susceptibles d'être soumis à des températures élevées.

### ART ANTERIEUR

Le polyamide est un polymère synthétique largement utilisé pour la fabrication de divers articles, tels que des pièces moulées et/ou injectées. Le polyamide peut subir des dégradations lorsqu'il est soumis à des éléments ou conditions externes tels que les rayons UV, la chaleur, et/ou les intempéries. Des dégradations peuvent également être induites par la chaleur utilisée au cours de sa fabrication et/ou de sa mise en forme. Cette instabilité se traduit par des dégradations, des pertes de propriétés mécaniques, et des changements de couleur. Ces problèmes peuvent devenir critiques pour un certain nombre d'applications, telles que notamment des pièces dans le domaine de l'automobile qui sont notamment soumises à des chaleurs importantes.

Pour améliorer la stabilité vis-à-vis de la chaleur des polyamides, il est connu de leur associer des agents stabilisants particuliers. De nombreux additifs sont commercialisés à cet effet. On connait par exemple l'utilisation de l'iodure de cuivre, notamment en association avec d'iodure de potassium qui est dans la plupart des cas utilisé et qui fournit de bonnes propriétés de stabilisation. Il est également connu d'utiliser des additifs plus complexes tels que composés antioxydants phénoliques encombrés, des stabilisants présentant au moins un motif amine encombrée de type HALS ou des stabilisants phosphorés.

Toutefois, il existe un besoin d'obtenir des compositions polyamides encore plus performantes au niveau de la stabilisation vis-à-vis de la chaleur, et à moindre cout.

Il est connu d'ajouter de l'alcool polyhydrique lors d'une étape d'extrusion en mélange avec du polyamide déjà formé pour obtenir une thermostabilisation du polyamide comme mentionné dans le document US2010/0029819. Toutefois, l'ajout des alcools polyhydriques au polyamide en mélange reste contraignante dans la mesure ou une étape industrielle supplémentaire est nécessaire et que toute refonte des polyamides après leur fabrication tend à les dégrader et à diminuer leur propriétés intrinsèques, notamment pour les applications fils, fibres et films. Par ailleurs, les alcools polyhydriques ajoutés de cette manière sont facilement extractibles au cours du temps et la performance des formulations aura tendance à ainsi diminuer, et ce de manière encore plus critique pour les applications fils, fibres et films présentant une importante surface spécifique.

Il était par ailleurs connu d'introduire de l'alcool polyhydrique lors de la synthèse du polyamide. C'est ce qui est notamment réalisé dans la demande WO2007036929 pour obtenir une fluidité accrue en fondu du polyamide.

Il existe ainsi la nécessité de remédier à ces inconvénients tout en préservant les propriétés recherchées par l'alcool polyhydrique dans le polyamide. En outre, il existe un besoin d'obtenir des compositions polyamides encore plus performantes au niveau de la stabilisation vis-à-vis de la chaleur, de la lumière et/ou des intempéries et à moindre cout.

### INVENTION

La demanderesse a mis en évidence de façon tout à fait surprenante que l'utilisation d'un alcool polyhydrique comportant au moins 3 groupements hydroxyles de formule (I) représenté par la formule :

R-(OH)n (I)

- n est compris entre 3 et 8
- R est un radical hydrocarboné aliphatique ou cycloaliphatique, substitué ou non, comprenant éventuellement des hétéroatomes tels que N, S, O et/ou P,
lors d'un procédé de polymérisation du polyamide permettait de conférer au polyamide modifié obtenu une augmentation de la stabilité vis-à-vis de la chaleur.

Avantageusement, l'alcool polyhydrique est un alcool dans lequel les fonctions alcools sont portées par des carbones aliphatiques, en particulier il s'agit d'un alcool aliphatique, voire d'un alcool comprenant uniquement des liaisons saturées.

Un tel composé lorsqu'il est ajouté en cours de polymérisation du polyamide permettra l'obtention de polyamides modifiés dans lequel l'alcool polyhydrique peut se trouver lier de manière covalente aux chaines du polyamide soit par réaction avec les groupements terminaux de type acide carboxylique soit par réaction avec les amides intracaténaires. Un tel effet sur la thermo stabilisation parait surprenant dans la mesure où il était connu que l'ajout d'un alcool polyhydrique lors de la synthèse du polyamide conduirait à la formation de fonctions esters avec les groupements terminaux acides carboxyliques du polyamide, comme notamment explicité dans la demande WO2007036929 ce qui induirait une diminution importante des fonctions hydroxyles libres de l'alcool polyhydrique et par conséquent sa capacité à agir comme agent stabilisant. Or comme observé dans la partie expérimentale c'est exactement l'inverse qui se produit et on remarque une forte rétention des propriétés mécaniques après un test de vieillissement.

Le polyamide modifié selon l'invention dans lequel un alcool polyhydrique est ajouté lors de la polymérisation permet d'obtenir des propriétés comparables voire supérieures à celles des compositions polyamides comprenant l'alcool polyhydrique ajouté en mélange par une extrusion subséquente.

Notamment, les liaisons covalentes peuvent permettre de diminuer, limiter, voire empêcher, les phénomènes conduisant à un « lavage » de l'alcool de la composition. Ceci peut être particulièrement utile dans le cas de pièces en contact avec des liquides chauds, comme des pièces de circuit de refroidissement.

Il apparait par ailleurs, que l'ajout d'un alcool polyhydrique lors de la polymérisation du polyamide permet d'obtenir une bonne répartition dudit alcool dans la matrice du polyamide et ceci même en utilisant des proportions faibles. Ceci est d'autant plus avantageux dans la mesure où il est généralement difficile lors d'une introduction d'une molécule telle que l'alcool polyhydrique en extrusion de parfaitement maitriser la quantité de molécule ajoutée, causant des fluctuations de performances applicatives, et nécessitant d'en incorporer une plus grande quantité pour être sur d'avoir la quantité minimale. Il apparait ainsi que la bonne répartition homogène de l'alcool polyhydrique permet une bonne efficacité de la stabilisation vis-à-vis de la chaleur tout en utilisant des proportions moindres d'additifs ; permettant ainsi d'éviter l'utilisation d'une trop importante quantité d'additif qui peut affecter d'autres propriétés, comme par exemple la fluidité de la composition.

Il apparait de plus que l'ajout d'un alcool polyhydrique lors de la polymérisation du polyamide permet d'éviter une perte de l'alcool polyhydrique. En effet, il apparait que lorsque celui-ci est ajouté en voie fondu, par extrusion, un phénomène d'exsudation est observée au cours du temps provoquant un dépôt de l'additifs sur les équipements, notamment les trémies et leurs encrassements.

Un polyamide modifié par au moins un alcool polyhydrique selon l'invention présente notamment un bon compromis de propriétés rhéologiques et mécaniques adéquat pour de nombreuses applications.

La présente invention concerne ainsi l'utilisation d'un alcool polyhydrique comportant au moins 3 groupements hydroxyles de formule (I) représenté par la formule :

R-(OH)n (I)

- n est compris entre 3 et 8
- R est un radical hydrocarboné aliphatique ou cycloaliphatique, substitué ou non, comprenant éventuellement des hétéroatomes tels que N, S, O et/ou P,
lors d'un procédé de polymérisation du polyamide pour conférer au polyamide modifié obtenu une augmentation de la stabilité, en particulier dans le temps, vis-à-vis de la chaleur. En particulier, l'utilisation d'un alcool polyhydrique comportant au moins 3 groupements hydroxyles de formule (I) lors d'un procédé de polymérisation du polyamide présente un effet stabilisant vis-à-vis du vieillissement à la chaleur, en particulier il agit également en tant qu'agent de brillance et/ou agent anti-encrassement,
notamment par rapport à un agent non utilisé en synthèse. Cela peut par exemple permettre d'éviter une montée en pression des packs de filage et ainsi améliorer le taux d'utilisation de l'équipement.

L'invention concerne aussi des polyamides susceptibles d'être obtenus par l'utilisation telle que décrite précédemment.

La présente invention concerne aussi des articles réalisés pour des applications exposées à des températures élevées, notamment des températures supérieures ou égale à 80°C, plus particulièrement des températures supérieures ou égale à 110°C, plus spécifiquement des températures supérieures ou égale à 180°C, obtenus par mise en forme d'une composition comprenant au moins un polyamide obtenu par un procédé de polymérisation dans lequel on ajoute l'alcool polyhydrique lors de cette polymérisation.

On utilise généralement de 0,05 à 20 % en poids d'alcool polyhydrique par rapport au poids total du polyamide, préférentiellement de 0,5 à 10 % en poids, en particulier de 1 % à 5 % en poids, notamment de 1 à 4 % en poids.

On utilise généralement de 0,05 à 20 % en poids d'alcool polyhydrique par rapport au poids total de la composition, préférentiellement de 0,5 à 10 % en poids, en particulier de 1 % à 4 % en poids, notamment de 1 à 3,5 % en poids.

La proportion molaire de composé d'alcool polyhydrique lié de manière covalente au polyamide est préférentiellement comprise entre 10 et 100 %, plus préférentiellement comprise entre 30 à 70 %. La proportion molaire de composé d'alcool polyhydrique lié est notamment calculé par le rapport du nombre de mole de composé d'alcool polyhydrique lié sur le nombre de mole totale de composé d'alcool polyhydrique.

L'alcool polyhydrique présente de 3 à 8 groupements hydroxyles, en particulier 4, 6 ou 8.

Les alcools polyhydriques de l'invention peuvent être choisis parmi les composés aliphatiques et cycloaliphatiques et peuvent contenir un ou plusieurs hétéroatomes, tel que N, S, O et/ou P. Les alcools polyhydriques peuvent contenir un ou plusieurs substituants tels que les groupements éther, amine, acide carboxylique, amide ou ester.

R comprend préférentiellement de 2 à 20 atomes de carbone, plus préférentiellement de 4 à 10 atomes de carbone.

Le radical R cycloaliphatique peut notamment être le cyclohexane.

Le radical R peut par exemple être substitué par divers groupements, tel que par exemple une fonction amine, une fonction thiol ou un halogène comme par exemple Cl, F, Brou I.

R correspond préférentiellement à une chaine aliphatique hydrocarbonée linéaire ou branchée et comprenant éventuellement des hétéroatomes tels que N, S, O et/ou P.

L'alcool polyhydrique ou le composé de formule (I) selon l'invention peut également comporter une ou plusieurs fonctions, notamment amines, telles que des amines primaires, secondaires et/ou tertiaires.

Avantageusement les fonctions hydroxyle aliphatique des composés de formule (I) ne sont pas encombrés, c'est-à-dire par exemple que les atomes de carbone situés en α de la fonction hydroxyle aliphatique ne sont de préférence pas substitués par des substituants encombrants, tels que des alkyles ramifiés.

On peut citer ainsi comme alcools polyhydriques ceux mentionné dans le groupe comprenant : les triols, comme le glycérol, le trimethylolpropane, le 2,3-di-(2'-hydroxyethyl)-cyclohexan-1-ol, l'hexane-1,2,6-triol, le 1,1,1-tris-(hydroxymethyl)ethane, le 3-(2'-hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le di-trimethylopropane, l'ethoxylate de trimethylolpropane, ou le propoxylate de trimethylolpropane ; les polyols tels que le pentaerythritol, le dipentaerythritol, et le tripentaerythritol; et les saccharides tels que la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, l'allitol, l'altritol, le gulitol, l'erythritol, le threitol, et le D-gulonique-y-lactone; et les composés semblables.

Les alcools polyhydriques préférés incluent ceux possédant au moins une paire de groupements hydroxyles dont les atomes de carbone auxquels ils sont respectivement liés sont séparés par au moins un atome, préférentiellement un atome de carbone ou d'oxygène.

Préférentiellement l'alcool polyhydrique utilisé dans la composition thermoplastique est le diglycérol, le triglycérol, le pentaérythritol, le dipentaérythritol, le tripentaérythritol, et le di-trimethylolpropane. Plus préférentiellement l'alcool polyhydrique utilisé est le dipentaérythritol et ou le tripentaérythritol.

Selon une variante, le composé de Formule (I) est dépourvu de fonction amine, et en particulier ne comprend pas d'hétéroatome tel que N, S, O et/ou P.

Selon une autre variante, le composé de Formule (I) peut comprendre une fonction amine. On peut citer comme composé de formule (I) le tris(hydroxyméthyle) amino méthane (RN CAS : 77-86-1) et/ou un de ses sels.

On peut notamment citer comme sels, les chlorures d'ammonium, les bromure d'ammonium, les sulfates d'ammonium, les sulfonates d'ammonium, les phosphates d'ammonium, et les sels d'acide carboxylique et d'amine comme les adipates d'ammonium comme par exemple le sel d'acide adipique et de tris(hydroxyméthyle) amino méthane.

La composition selon l'invention peut présenter :
- une rétention de la contrainte en traction à la rupture d'au moins 92 %, notamment d'au moins 95 % après vieillissement 1000h à 170°C.

La composition selon l'invention peut présenter :
- une rétention de la contrainte en traction à la rupture d'au moins 95 %, après vieillissement 500h à 210°C, et/ou
- une rétention de la contrainte en traction à la rupture d'au moins 60 %, notamment d'au moins 65 % après vieillissement 1000h à 210°C.

La composition selon l'invention peut présenter :
- une rétention du choc Charpy non-entaillé d'au moins 70 %, notamment d'au moins 80 %, voire d'au moins 85 % après vieillissement 1000h à 170°C.

La composition selon l'invention peut présenter :
- une rétention du choc Charpy non-entaillé d'au moins 60 %, notamment d'au moins 80 %, en particulier d'au moins 90 % après vieillissement 500h à 210°C, et/ou
- une rétention du choc Charpy non-entaillé d'au moins 45 %, notamment d'au moins 55 %, en particulier d'au moins 65 % après vieillissement 1000h à 210°C.

En particulier, la composition présente une amélioration de la longueur moyenne d'écoulement, en particulier selon le test Spirale, d'au moins 150 % par rapport à une composition comprenant une quantité identique, en poids, de DPE.

La contrainte en traction à la rupture et le choc Charpy non-entaillé évoqués ci-dessus sont mesurés conformément aux protocoles présentés dans les exemples.

Le polyamide de l'invention est notamment choisi dans le groupe comprenant les polyamides obtenus par polycondensation d'au moins un diacide carboxylique aliphatique avec une diamine aliphatique ou cyclique ou cycloaliphatique ou arylaliphatique comme le PA 6.6, PA 6.10, PA 6.12, PA 10.10, PA 10.6, PA 12.12, PA 4.6, MXD6, PA 92, PA 102 ou entre au moins un diacide carboxylique aromatique et une diamine aliphatique ou aromatique comme les polytéréphtalamides du type PA 9T, PA 10T, PA 11T, PA 12T, PA 13T ou PA 6T/MT, PA 6T/6I, PA 6T/66, PA 66/6T, polyisophtalamides du type PA 6I, PA 6I/6T, les polynaphtalamides du type PA 10N, PA 11N, PA 12N, les polyaramides comme le Kevlar, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, PA 13 ou leur mélange et (co)polyamides. Comme type de copolyamide on peut notamment citer le polyamide 6/66, le polyamide 6/11, le polyamide 6/12, et le polyamide 11/12.

Les diamines et les diacides peuvent porter des hétéroatomes. On peut citer l'acide 5-hydroxyisophtalique, l'acide 5-sulfoisophtalique ou leurs sels; tel que par exemple les de lithium, de sodium, ou de zinc.

On préfère notamment les polyamides semi-cristallins aliphatiques ou semi-aromatiques.

On préfère particulièrement les polyamides de type 6, de type 610, de type 66 et de type 66/6T.

De manière générale, le polyamide est un polyamide semi-cristallin présentant une viscosité apparente en fondu comprise entre 0,5 et 1200 Pa.s, mesurée selon la norme ISO 11443 à un taux de cisaillement de 1000 s⁻¹ à une température égale à 20°C au-dessus de sa température de fusion du polyamide, préférentiellement comprise entre 0,5 et 500 Pa.s.

On peut notamment utiliser des polyamides de poids moléculaires variables par addition avant ou pendant la polymérisation des monomères de polyamide, ou encore en voie fondue à l'extrusion, de monomères modifiant la longueur des chaînes, tel que notamment des composés difonctionnels et/ou monofonctionnels présentent des fonctions amines ou acides carboxyliques capables de réagir avec les monomères du polyamide ou le polyamide.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut utiliser au début, en cours ou en fin de polymérisation tout type d'acides mono- ou di-carboxylique, aliphatiques ou aromatiques ou tout type d'amines mono- ou di-amines, aliphatiques ou aromatiques.

On peut utiliser tout particulièrement un polyamide obtenu au moins à partir d'acide adipique et d'hexaméthylène diamine ou de leurs sels tels que l'adipate d'hexaméthylènediamine, pouvant éventuellement comprendre diverses proportions d'autres monomères de polyamide. On peut citer à cet effet les polyamides 66/6T, contenant diverses teneur molaire en monomère acide téréphtalique.

Le polyamide peut notamment être un copolyamide dérivé notamment des polyamides ci-dessus, ou les mélanges de ces polyamides ou (co)polyamides.

On peut également utiliser des polyamides branchés de haute fluidité notamment obtenus par mélange en polymérisation, en présence des monomères de polyamide, d'au moins un composé multifonctionnel comprenant au moins 3 fonctions réactives identiques de type fonction amine ou fonction acide carboxylique.

On peut également utiliser comme polyamide de haute fluidité un polyamide étoile comprenant des chaînes macromoléculaires étoiles et le cas échéant des chaînes macromoléculaires linéaires. Les polymères comprenant de telles chaînes macromoléculaires étoiles sont par exemple décrits dans les documents WO97/24388 et WO99/64496.

Ces polyamides étoiles sont notamment obtenus par mélange en polymérisation, en présence des monomères de polyamide, un aminoacide ou lactame tel que le caprolactame, d'au moins un composé multifonctionnel comprenant au moins 3 fonctions réactives identiques de type fonction amine ou fonction acide carboxylique. Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

L'alcool polyhydrique de l'invention est donc ajouté lors de la polymérisation du polyamide. On préfère notamment la polymérisation à l'état fondu qui est réalisée à l'état liquide, avec un milieu de polymérisation ne contenant pas de solvant autre que de l'eau, éventuellement. Le milieu de polymérisation peut par exemple être une solution aqueuse comprenant les monomères, ou un liquide comprenant les monomères.

L'addition en cours de polymérisation conduit généralement à la formation de liaisons covalentes entre l'alcool polyhydrique et le polyamide. Celles-ci peuvent notamment permettre de diminuer, limiter, voire empêcher, les phénomènes conduisant à un « lavage » de l'alcool polyhydrique de la composition. Ceci peut être très utile dans le cas de pièces en contact avec des liquides chauds, comme des pièces de circuit de refroidissement.

La polymérisation du polyamide selon le procédé de l'invention est notamment réalisée selon les conditions opératoires classiques de polymérisation des polyamides. La polymérisation du polyamide peut être conduite dans des conditions tout à fait similaires à une polymérisation en absence d'alcool polyhydrique.

Selon un autre de ses aspects, l'invention a donc pour objet un procédé de polymérisation de polyamide, comprenant une étape de mise en contact des précurseurs du polyamide avec l'alcool polyhydrique dans des conditions, notamment de température et de pression, permettant la polymérisation du polyamide, puis la récupération de celui-ci. Lesdits précurseurs pouvant être des monomères, des sels, des oligomères et/ou des pré-polymères de polyamide.

Un tel procédé de polymérisation peut comprendre brièvement :
a) un chauffage sous agitation et sous pression du mélange des monomères du polyamide ; et
b) un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous azote ou sous vide, pour ainsi continuer la polymérisation par élimination de l'eau formée.

Les polymérisations à partir de monomères de diacides carboxyliques et de diamines comprennent généralement trois étapes. La première étape est la concentration d'un di-sel carboxylate-ammonium dans l'eau, appelé "sel N". Cette étape est suivie d'une amidification qui est une condensation des fonctions acide et amine, comprenant généralement les phases suivantes : une phase de distillation sous pression et une phase de décompression. La condensation est poursuivie ensuite sous pression atmosphérique ou sous vide jusqu'au degré de polymérisation désiré. Cette étape est appelée finition. Le polyamide est généralement ensuite extrudé puis granulé dans une phase de granulation.

Les polymérisations à partir des lactames et des aminoacides, en particulier la fabrication du polyamide 6, peuvent comprendre une étape de mélange des monomères avec de l'eau, une étape de chauffage, éventuellement une étape d'augmentation de la pression suivie d'une étape de décompression, éventuellement une étape de finition sous vide, généralement une étape de granulation du produit obtenu, une étape d'extraction, et une étape de séchage.

L'alcool polyhydrique peut être introduit avant le début de l'étape de concentration du "sel N" pour le polyamide 66 ou l'étape de mélange des monomères avec de l'eau pour le polyamide 6, et avant la fin de l'étape de finition. On préfère notamment ajouter l'alcool polyhydrique au mélange des monomères constitutifs du polyamide. Cet alcool polyhydrique peut aussi être introduit après la phase de distillation sous pression, de préférence après la phase de décompression. L'alcool polyhydrique peut aussi être introduit entre le début et la fin de l'étape de finition.

Le procédé de polymérisation du polyamide peut être continu ou discontinu.

Dans le cas d'un procédé en continu, la phase de décompression est réalisée par passage dans un flasher, et l'alcool polyhydrique peut être introduit à l'entrée du flasher, notamment en début d'étape de décompression par passage dans le flasher.

Dans le cas d'un procédé en discontinu, on préfère ajouter l'alcool polyhydrique avec le mélange des monomères du polyamide.

L'alcool polyhydrique peut être ajouté au début, au milieu ou en fin de polymérisation du polyamide, et en présence ou non d'une quantité de diamine ou diacide pour assurer une parfaite stœchiométrie des fonctions réactives. Cet ajustement de la stœchiométrie permet notamment de moduler la taille de la chaîne du polyamide modifié.

L'agent stabilisant de type alcool polyhydrique de l'invention peut se lier chimiquement avec les fonctions amines et/ou acides carboxyliques du polyamide ou des monomères du polyamide.

L'alcool polyhydrique peut être ajouté en fin de polymérisation, ou additivation dite « tardive », qui permet de limiter le nombre de réaction dudit alcool avec les chaînes polyamides ou les monomères du polyamide. L'alcool polyhydrique demeure ainsi majoritairement à l'état libre dans le polyamide, c'est-à-dire non lié par une liaison covalente.

L'alcool polyhydrique peut ainsi être ajouté au milieu réactionnel au cours ou en fin de polymérisation du polyamide. L'alcool polyhydrique peut être ajouté en fin de polymérisation du polyamide, notamment en veine fondue juste avant la vidange du réacteur de polyamidification. L'homogénéité du mélange de polyamide fondu et de l'alcool polyhydrique peut être obtenue par l'utilisation d'un mélangeur statique placé avant la filière d'extrusion du réacteur de polyamidification.

L'alcool polyhydrique peut être ajouté au milieu réactionnel à l'état solide, par exemple sous forme de poudre ou d'écailles, à l'état fondu, en dispersion ou à l'état dissous dans un solvant approprié tel que par exemple de l'eau.

On peut utiliser le polyamide de l'invention pour faire de compositions polyamides qui sont généralement obtenues par mélange des différents composés, charges et/ou additifs. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, avant préparation de la composition finale. On peut par exemple effectuer un pré-mélange dans une résine, par exemple du polyamide, de façon à réaliser un mélange maitre.

La composition selon l'invention peut comprendre un ou plusieurs autres polymères, de préférence polyamides ou copolyamides.

La composition selon l'invention peut comprendre entre 20 et 90 % en poids, préférentiellement entre 20 et 70 % en poids, et plus préférentiellement entre 35 et 65% en poids de polyamide selon l'invention obtenu par le procédé de polymérisation tel que décrit précédemment, par rapport au poids total de la composition.

La composition peut en outre comprend des charges de renfort ou de remplissage. Les charges de renfort ou de remplissage sont des charges classiquement utilisées pour la réalisation de compositions polyamides. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

On préfère notamment utiliser les fibres de renfort, telles que les fibres de verre. De façon préférentielle, la fibre la plus utilisé est la fibre de verre, de type dit coupé (chopped), ayant un diamètre compris entre 7 et 14 µm et une longueur inférieure à 5 mm. Ces charges peuvent présenter un ensimage surfacique qui assure l'adhésion mécanique entre les fibres et la matrice polyamide.

La composition selon l'invention peut comprendre entre 5 et 60 % en poids de charges de renfort ou de remplissage, préférentiellement entre 10 et 40 % en poids, par rapport au poids total de la composition.

La composition selon l'invention comprenant le polyamide tel que défini précédemment peut comprendre au moins un agent modificateur du choc, c'est-à-dire un composé capable de modifier la résistance aux chocs d'une composition polyamide. Ces composés modificateurs du choc comprennent préférentiellement des groupements fonctionnels réactifs avec le polyamide.

On entend selon l'invention par groupements fonctionnels réactifs avec le polyamide, des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 2 µm dans la matrice.

On utilise préférentiellement des agents modificateurs du choc comprenant des groupements fonctionnels réactifs avec le polyamide en fonction de la nature acide ou amine du déséquilibre ΔGT=GTC-GTA (concentration en groupements terminaux acide GTC moins concentration en groupements terminaux amine GTA) du polyamide. Ainsi par exemple, si le ΔGT est « acide » (GTC>GTA) on utilisera préférentiellement des groupements fonctionnels réactifs capables de réagir ou d'interagir chimiquement avec les fonctions acides du polyamide, notamment par covalence, interaction ionique ou hydrogène ou liaison de van der Walls. Si par exemple, le ΔGT est « aminé » (GTA>GTC) on utilisera préférentiellement des groupements fonctionnels réactifs capables de réagir ou d'interagir chimiquement avec les fonctions amines du polyamide, notamment par covalence, interaction ionique ou hydrogène ou liaison de van der Walls. On utilise préférentiellement des agents modificateurs du choc ayant des groupements fonctionnels réactifs avec le polyamide présentant un ΔGT de nature « amine ».

Les agents modificateurs du choc peuvent très bien comprendre en eux-mêmes des groupements fonctionnels réactifs avec le polyamide, par exemple pour ce qui concerne l'éthylènes acide acrylique (EAA).

Il est également possible de leur adjoindre des groupements fonctionnels réactifs avec le polyamide, généralement par greffage ou copolymérisation, par exemple pour l'éthylène-propylène-diène (EPDM) greffé par de l'anhydride maléique.

On peut utiliser selon l'invention, les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidyle méthacrylate. Ces composés selon l'invention peuvent également comprendre en plus d'autres monomères que ceux mentionnés précédemment.

La base du composé modificateur du choc, éventuellement appelé base élastomérique, peut être choisie dans le groupe comprenant : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

En plus des groupements listés ci-dessus, ces agent modificateurs de chocs peuvent comprendre également, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyles notamment époxy, les esters glycidyles glycidyle , les anhydrides notamment les anhydrides maléiques, les oxazolines, les maléïmides, ou leurs mélanges.

Des tels groupements fonctionnels sur les élastomères sont par exemple obtenus par utilisation d'un co-monomère lors de la préparation de l'élastomère.

Comme agents modificateurs de chocs comprenant des groupements fonctionnels réactifs avec le polyamide, on peut notamment citer les terpolymères d'éthylène, ester acrylique et glycidyle méthacrylate, les copolymères d'éthylène et de butyl ester acrylate, les copolymères d'éthylène, n-butyl acrylate et glycidyle méthacrylate, les copolymères d'éthylène et d'anhydride maléique, les copolymères éthylène-propylène-diène greffé par de l'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

La proportion en poids des agents modificateur du choc dans la composition totale est notamment comprise entre 3 et 25 %, préférentiellement entre 4 et 8 %, par rapport au poids total de la composition.

La composition selon l'invention peut aussi comprendre d'autres additifs participant à la stabilisation thermique et/ou lumière de la composition, tels que ceux choisis dans le groupe comprenant : le couple Cul et KI, les composés phénoliques encombrés, des stabilisants présentant au moins un motif amine encombrée de type HALS, des stabilisants phosphorés organiques ou inorganiques, tel que de l'hypophosphite de sodium ou de manganèse.

Selon une variante, elle comprend une teneur en Cul/KI allant de 0,1 à 1,5 % en poids, notamment de 0,5 à 1,2 % en poids par rapport au poids total de la composition.

Selon une autre variante elle comprend une teneur limitée, voire nulle en agent stabilisant de type Cul/KHalogène.

La composition peut également comprendre une teneur limitée, voire nulle en agents stabilisants de types :
- phénols encombrés, et
- présentant au moins un motif amine encombrée de type HALS

Par teneur limitée on entend une teneur inférieure ou égale à 0,5 % en poids, notamment à 0,2 % en poids, en particulier à 0,1 % en poids, voire à 0,05 % en poids par rapport au poids total de la composition.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels.

Selon un mode de réalisation particulier, la composition comprend en outre au moins une charge, notamment de renfort , en particulier telle que définie ci-après, au moins un agent ignifugeant, en particulier tel que défini ci-après, et/ou au moins un additif, en particulier tel que défini ci-après, ces composés pouvant être présents en des teneurs telles que présentées dans la description.

Selon une variante, les compositions sont dépourvues d'agent ignifugeant, et en particulier d'agent ignifugeant du type triazine.

Ces charges et additifs peuvent être ajoutés au polyamide modifié par des moyens usuels adaptés à chaque charge ou additif, tel que par exemple lors de la polymérisation ou en mélange en fondu.

Selon un mode de réalisation particulier, l'alcool polyhydrique est utilisé, notamment en une teneur allant de 1 à 5 % en poids, dans une composition comprenant, voire consistant en :
- du polyamide, notamment en une teneur allant de 20 à 90 % en poids,
- optionnellement des charges de renfort et/ou de remplissages, notamment en une teneur allant de 5 à 60 % en poids,
- optionnellement des agents modificateurs du choc, notamment en une teneur allant de 3 à 25 % en poids,
- éventuellement des additifs, notamment en une teneur allant de 0 à 15 % en poids,
les % en poids étant par rapport au poids total de la composition.

Les compositions polyamides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage, notamment le moulage par injection, l'extrusion, l'extrusion soufflage, ou encore le rotomoulage. Le procédé d'extrusion peut notamment être un procédé de filage ou de fabrication de films.

La présente invention concerne également la fabrication d'articles de type étoffes imprégnées ou articles composites à fibres continues. Ces articles peuvent notamment être fabriqués par mise en présence d'une étoffe et de la composition polyamide selon l'invention à l'état solide ou fondu. Les étoffes sont des surfaces textiles obtenues par assemblage de fils ou de fibres solidarisés par un procédé quelconque, tel que notamment collage, feutrage, tressage, tissage, tricotage. Ces étoffes sont aussi désignées comme des réseaux fibreux ou filamenteux, par exemple à base de fibres de verre, de fibres de carbone ou autres. Leur structure peut être aléatoire, unidirectionelle (1D), ou multidirectionelle (2D, 2,5D, 3D ou autre).

La présente invention concerne également des articles obtenus par mise en forme de la composition selon l'invention, par exemple par extrusion, moulage, ou moulage par injection. On peut citer comme articles ceux utilisés dans le domaine de l'automobile ou de l'électronique et de l'électricité par exemple.

En particulier, les articles comprennent des charges, en particulier des charges de renfort, notamment telles que définies dans la présente description.

On entend généralement par articles réalisés pour des applications exposées à des températures élevées, notamment des températures supérieures ou égale à 80°C, des articles fabriquées pour contenir ou transporter des fluides, c'est-à-dire des liquides ou gaz, portés à des températures élevées comme par exemple des articles du circuit de refroidissement d'une automobile qui sont destinés à maintenir le moteur à une température optimale et quasi constante d'environ 100°C. Ces articles selon la présente invention sont ainsi définis par leurs applications qui les exposent à des températures élevées ; ceci impliquant leurs conceptions, fabrications et destinations basées sur cette contrainte technique dans un mode de fonctionnement usuel.

Selon encore un autre de ses aspects, l'invention a pour objet l'utilisation d'articles dans des applications impliquant un chauffage prolongée, et en particulier impliquant un contact prolongé avec un liquide ou un fluide chaud. Ce contact peut être de l'ordre de plus de 500 ou 1000 heures.

Comme articles soumis à des températures élevées on peut citer par exemple les articles du circuit de refroidissement eau/glycol, par exemple la boite à eau, le tuyau de transfert, le boitier thermostatique, le boitier de dégazage, le radiateur, les articles du circuit d'air comme par exemple la tubulure turbo, l'échangeur air/air (intercooler), le boitier d'entrée ou de sortie d'air de refroidisseur turbo, le circuit de recirculation des gaz d'échappement (Exhaust Gas Recycling), le collecteur d'admission d'air et tubulures associées, le boitier de catalyseur, les pièces du groupe moto-ventilateur, les refroidisseurs intermédiaires, et les articles du circuit d'huile comme les couvres culasse, le carter d'huile, le module de filtration d'huile, le carter de distribution et la tuyauterie d'assemblage transportant l'huile. Ces articles sont bien connus du domaine des véhicules propulsés par un moteur comme les automobiles.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

### Caractérisations

Indice de viscosité en solution dans l'acide formique (IV en mL/g) selon la norme ISO307.

Teneurs en groupements terminaux acide (GTC) et amine (GTA) : dosées par potentiométrie, exprimées en meq/kg.

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min.

### Exemple comparatif 1 : Préparation d'un PA 66

Dans un réacteur de polymérisation sont introduits 150 g (0,572 mol) de sel N (sel 1:1 d'hexaméthylène diamine et d'acide adipique), 136 g d'eau déminéralisée et 2 g d'un agent antimousse. Le polyamide 66 est fabriqué selon un procédé standard de polymérisation de type polyamide 66, avec 30 minutes de finition à 272°C. Le polymère obtenu est coulé sous forme de jonc, refroidi et mis sous forme de granulé par coupe des joncs.

Le polymère obtenu présente les caractéristiques suivantes : GTC = 85,7 meq/kg, GTA = 43,7 meq/kg, et IV de 135 mL/g.

### Exemple 1 : Préparation d'un PA 66 en présence de DPE (teneur en « structure DPE » cible de 2,5 % en poids dans le polyamide final)

Dans un réacteur de polymérisation sont introduits 150 g (0,572 mol) de sel N (sel 1:1 d'hexaméthylène diamine et d'acide adipique), 3,6 g de dipentaerythritol (DPE) à 90% fourni par Acros comprenant un mélange de 90% de dipentaerythritol et de 10% de monopentaerythritol MPE) soit 0,0127 mol de DPE et 0,0026 mol de MPE, 136,3 g d'eau déminéralisée et 2 g d'un agent antimousse. Le polyamide 66 polymérisé en présence de DPE est fabriqué selon un procédé standard de polymérisation de type polyamide 66, avec 30 minutes de finition à 272°C. Le polymère obtenu est coulé sous forme de jonc, refroidi et mis sous forme de granulé par coupe des joncs.

Le polymère obtenu présente les caractéristiques suivantes : GTC = 52,8 meq/kg, GTA = 88,1 meq/kg. En comparaison avec le PA 66 synthétisé sans DPE, il présente donc plus de fonctions amines terminales qu'acide carboxyliques terminales, indiquant qu'une réaction de greffage a eu lieu liant le DPE et MPE aux chaînes polyamide. L'indice de viscosité est IV=104,6 mL/g. Le polymère est semi-cristallin et a les caractéristiques thermiques suivantes Tc= 224,5 °C, Tf= 261,8 °C (valeurs identiques à celles d'un polyamide 66).

Le PA 66 polymérisé en présence de DPE présente ΔGT=GTC-GTA=-35,3 meq/kg contre ΔGT=GTC-GTA=42 meq/kg pour un PA 66 polymérisé sans DPE, ce qui indique que le DPE (et MPE) a réagi partiellement par l'intermédiaire de ses fonctions hydroxyle avec les fonctions acide de l'acide adipique, à la hauteur de 77,3 meq/kg. La quantité de fonction hydroxyle apportées par le DPE est de (6x0,0127+4x0,0026) x 1000 / ((150x226,34/262,34+3,6)/1000) = 651 meq/kg. La fraction molaire de fonctions hydroxyle du DPE (et MPE) ayant réagi est égale au rapport de la quantité de fonctions hydroxyle ayant réagi sur la quantité de fonctions hydroxyle initiales du DPE et MPE, soit 77,3/651=12%. Si on considère une equi-réactivité des fonctions hydroxyle, cela signifie qu'en moyenne 0,7 fonction hydroxyle par DPE a réagi et 0,5 fonction hydroxyle par MPE a réagi. En moyenne, cela signifie que 70 % molaire du DPE est lié et que 50 % molaire du MPE est lié chimiquement au polyamide.

### Exemple comparatif 2 : Préparation d'un PA 66

Dans un réacteur de polymérisation sont introduits 80.0 kg (304.9 mol) de sel N, 72.8 kg d'eau déminéralisée et 5,5 g d'agent antimousse Silcolapse 5020®. Le polyamide est fabriqué selon un procédé standard de polymérisation de type polyamide 66, avec 30 minutes de finition à 275°C. Le polymère obtenu est coulé sous forme de jonc, refroidi et mis sous forme de granulé par coupe des joncs.

Le polymère obtenu présente un indice de viscosité de 137,5mL/g.

### Exemple 2 : Préparation d'un PA 66 en présence de DPE (teneur en « structure DPE » cible de 2 % en poids dans le polyamide final)

Dans un réacteur de polymérisation sont introduits 80.0 kg (304.9 mol) de sel N, 1,38 kg (5,43 mol) de dipentaerythritol, 72.8 kg d'eau déminéralisée et 5,5 g d'agent antimousse Silcolapse 5020®. Le polyamide modifié DPE est fabriqué selon un procédé standard de polymérisation de type polyamide 66, avec 30 minutes de finition à 275°C. Le polymère obtenu est coulé sous forme de jonc, refroidi et mis sous forme de granulé par coupe des joncs. Les granulés présentent un aspect de surface brillant.

Le polymère obtenu présente les caractéristiques suivantes : GTC = 54 meq/kg, GTA = 79 meq/kg et IV=106,5 mL/g.

### Exemple 3: Préparation d'un PA 66 en présence de DPE (teneur en « structure DPE » cible de 3 % en poids dans le polyamide final)

Dans un réacteur de polymérisation sont introduits 80.0 kg (304.9 mol) de sel N, 2,07 kg (8,15 mol) de dipentaerythritol, 72.8 kg d'eau déminéralisée et 5,5 g d'agent antimousse Silcolapse 5020®. Le polyamide modifié DPE est fabriqué selon un procédé standard de polymérisation de type polyamide 66, avec 30 minutes de finition à 275°C. Le polymère obtenu est coulé sous forme de jonc, refroidi et mis sous forme de granulé par coupe des joncs. Les granulés présentent un aspect de surface brillant.

Le polymère obtenu présente les caractéristiques suivantes : GTC = 44 meq/kg, GTA = 96 meq/kg.

### Exemples 4 et 5 : Préparation des formulations

Avant extrusion, les granulés de polyamide des exemples 2, 3 et exemples comparatifs 2 sont séchés à une teneur en eau inférieure à 1500 ppm. Des formulations sont réalisées par mélange des différents composants et additifs en voie fondu dans une extrudeuse bi-vis co-rotative WERNER&PLEIFEDER ZSK 40 fonctionnant à 40 kg/h et à une vitesse de 270 trs/min. Les températures de consigne des 8 zones sont respectivement : 250, 255, 260, 260, 265, 270, 275, 280 °C. Tous les composants de la formulation sont introduits au début de l'extrudeuse. Le jonc sorti d'extrudeuse est refroidi dans un bac d'eau, coupé sous la forme de granulés à l'aide d'un granulateur et conditionnés dans un sac thermo-sellé. Avant d'être injectés, les granulés sont séchés de sorte à obtenir un taux d'humidité inférieur à 1500 ppm.

Les formulations obtenues sont les suivantes :
- Exemple comparatif C3 : polyamide exemple comparatif C2 + Cul/KI de AJAY Europe + Fibres de verre (OCV 983 de Owens Corning Vetrotex)
- Exemple comparatif C4 : polyamide comparatif exemple C2 + Dipentaerythritol de Perstorp « Di-penta », nommé DPE + Fibres de verre
- Exemple 4 : polyamide exemple 2 + Fibres de verre
- Exemple 5 : polyamide exemple 3 + Fibres de verre

Les formulations réalisées sont injectées, sur une presse DEMAG 50T à 280°C avec une température de moule de 80°C, sous la forme d'éprouvettes multifonctions d'épaisseur 4 mm pour caractériser les propriétés mécaniques en traction (module en traction, contrainte à la rupture, déformation à la rupture - moyenne obtenue sur 5 échantillons) selon la norme ISO 527/1A et en impact (Charpy non entaillé - moyenne obtenue sur 10 échantillons) selon la norme ISO 179-1/1eU à 23°C avant et après vieillissement thermique sous air.

Le vieillissement thermique ventilé sous air est effectué en plaçant les éprouvettes dans une étuve Heraeus TK62120 régulée à 170°C ou 210°C. A différents temps de vieillissement, des éprouvettes sont sorties de l'étuve, refroidies à température ambiante et placées dans des sacs thermo-sellés pour éviter qu'elles ne reprennent d'humidité avant évaluation de leurs propriétés mécaniques.

On définit alors la rétention de contrainte à la rupture ou de résistance à l'impact à un temps de vieillissement donné par le rapport à ces mêmes propriétés avant vieillissement. On définit ainsi la rétention en pourcentage.

Les formulations ainsi que les propriétés sont regroupées dans le tableau 1 suivant :

**Tableau 1**

| | **C3** | **C4** | **4** | **5** |
|---|---|---|---|---|
| PA 66 (Exemple C2) (%) | 64,7 | 63,7 | - | - |
| PA 66/DPE (Exemple 2) (%) | - | - | 65,0 | - |
| PA 66/DPE (Exemple 3) (%) | - | - | - | 65,0 |
| Fibres de verre OCV 983 (%) | 35,0 | 35,0 | 35,0 | 35,0 |
| DPE (%) | - | 1,3 | - | - |
| Cul / KI (%) | 0,04/0,26 | - | - | - |
| | | | | |

| **Avant vieillissement** | | | | |
|---|---|---|---|---|
| Contrainte en traction à la rupture (MPa) | 210,2 | 212,3 | 213,4 | 210,8 |
| Impact Charpy non-entaillé (kJ/m2) | 90 | 81 | 65 | 50 |

| **Après vieillissement 500h@ 210°C** | | | | |
|---|---|---|---|---|
| Contrainte en traction à la rupture (MPa) | 147,9 | 193,7 | 208,5 | nm |
| Impact Charpy non-entaillé (kJ/m2) | 28 | 42 | 64 | nm |
| Rétention de la contrainte en traction à la rupture (%) | 70 | 91 | 98 | nm |
| Rétention du Choc Charpy non-entaillé (%) | 31 | 52 | 98 | nm |

| **Après vieillissement 1000h@ 210°C** | | | | |
|---|---|---|---|---|
| Contrainte en traction à la rupture (MPa) | 101 | 121 | 145 | nm |
| Impact Charpy non-entaillé (kJ/m2) | 16 | 23 | 44 | nm |
| Rétention de la contrainte en traction à la rupture (%) | 48 | 57 | 68 | nm |
| Rétention du Choc Charpy non-entaillé (%) | 18 | 28 | 68 | nm |

| **Après vieillissement 1000h@ 170°C** | | | | |
|---|---|---|---|---|
| Contrainte en traction à la rupture (MPa) | 191,7 | nm | nm | 202,3 |
| Impact Charpy non-entaillé (kJ/m2) | 41 | nm | nm | 44 |
| Rétention de la contrainte en traction à la rupture (%) | 90 | nm | nm | 96 |
| Rétention du Choc Charpy non-entaillé (%) | 45 | nm | nm | 88 |

| | | | | |
|---|---|---|---|---|
| % : les pourcentages sont exprimés en poids nm : non mesuré | | | | |

On observe ainsi clairement que la présence de DPE permet d'améliorer la rétention de résistance à l'impact et la contrainte à rupture en traction après vieillissement à 210°C en étuve aérée, par rapport au mélange Cul/KI. Il s'agit de l'effet recherché. En revanche, nous observons de manière tout à fait surprenante que l'introduction du DPE en cours de polymérisation engendre une rétention des propriétés mécaniques des compositions finales à la fois en traction et en impact plus importante que son introduction au moment de l'extrusion.

En outre la résistance au vieillissement est également améliorée à 170°C par l'introduction du DPE en cours de polymérisation, par rapport au mélange CuI/KI.

### Exemple 6 : Préparation des formulations pour fils industriel

Avant extrusion, les granulés de polyamide de l'exemple comparatif 2 est séché à une teneur en eau inférieure à 1500 ppm. La formulation est réalisée par mélange de l'additif en voie fondu dans une extrudeuse bi-vis co-rotative WERNER&PLEIFEDER ZSK 40 fonctionnant à 40 kg/h et à une vitesse de 270 trs/min. Les températures de consigne des 8 zones sont respectivement : 250, 255, 260, 260, 265, 270, 275, 280 °C. Tous les composants de la formulation sont introduits au début de l'extrudeuse. Le jonc sorti d'extrudeuse est refroidi dans un bac d'eau, coupé sous la forme de granulés à l'aide d'un granulateur et conditionnés dans un sac thermo-sellé.

La formulation obtenue est la suivante :
- Exemple comparatif C5 : polyamide exemple comparatif C2 + Dipentaerythritol de Perstorp « Di-penta », nommé DPE. Les granulés présentent un aspect de surface mat.

Les exemples 2 et C5 sont postcondensés à l'état solide en lit fixe sous un flux d'azote à 190°C pour augmenter leur indice de viscosité avant filage.

Le filage des lots est réalisé à 1kg/h sur une extrudeuse monovis de diamètre 18mm, dont les températures de consigne des 5 zones sont respectivement: 280, 290, 295, 295, 300°C. Le pack de filage est équipé d'un filtre tissé métallique 10µm de diamètre 48mm et d'une filière de 14 trous 0.33*4D dont la température de consigne est fixée à 293°C pour l'exemple 2 et 285°C pour l'exemple comparatif C5. Le filage est réalisé à 450m/min sur un bobinoir Barmag SW4 avec pour ensimage Delion F5103 1% sur fil.

Les exemples ainsi que les propriétés sont regroupées dans le tableau 2 suivant :

**Tableau 2**

| | **C5** | **6** |
|---|---|---|
| PA 66 (Exemple C2) (%) | 98 | **-** |
| PA 66/DPE (Exemple 2) (%) | - | 100 |
| DPE (%) | 2 | **-** |
| | | |

| **Postcondensation solide (PCS)** | | |
|---|---|---|
| Temps à 190°C (h) | 5,5 | 8 |
| IV (mL/g) | 189 | 181 |
| Aspect des granulés | Exsudation prononcée | Brillant |
| | | |

| **Filage** | | |
|---|---|---|
| Montée en pression des packs de filage (b/min) | 1,0 | Aucune montée |

Ainsi, après postcondensation les granulés de l'exemple C5 présentent un aspect de surface très mat dû à un phénomène d'exsudation amplifié par la postcondensation. L'exsudat, analysé par RMN¹H, est du DPE. Après postcondensation les granulés de l'exemple 2 présentent toujours un aspect de surface brillant. L'utilisation de l'additif selon la présente invention prévient donc des effets délétères de l'exsudation dudit additif : notamment l'encrassement des équipements et la perte d'additif.

En outre le polymère de l'exemple C5 colmate rapidement le filtre du pack de filage si bien que l'essai doit être arrêté prématurément. En revanche, le polymère de la présente invention ne présente aucune difficulté de filage.

### Exemple 7 : Préparation d'un PA 66 fonctionnalisé par la trométhamine

Dans un réacteur de polymérisation sont introduits 150 g (0,572 mol) de sel N (sel 1:1 d'hexaméthylène diamine et d'acide adipique), 2,49 g (0,017 mol) de trométhamine (THAM) fourni par Sigma-Aldrich, 1,236 g d'acide adipique (0,0085 mol), 136,3 g d'eau déminéralisée et 2 g d'un agent antimousse. Le polyamide 66 polymérisé en présence de THAM est fabriqué selon un procédé standard de polymérisation de type polyamide 66, avec 5 minutes de finition à 272°C. Le polymère obtenu est coulé sous forme de jonc, refroidi et mis sous forme de granulé par coupe des joncs.

Le polymère obtenu présente les caractéristiques suivantes: GTA = 140,6 meq/kg, GTC = 131,1 meq/kg. Le polymère est semi-cristallin et a les caractéristiques thermiques suivantes Tc= 215,5 °C, Tf= 259,7 °C (valeurs identiques à celles d'un polyamide 66).

Le PA 66 polymérisé en présence de THAM présente ΔGT=GTC-GTA=-9,5 meq/kg contre ΔGT=GTC-GTA=42 meq/kg pour un PA 66 polymérisé sans THAM, ce qui indique que le THAM a réagi chimiquement.

### Exemple 8 : Préparation d'un PA 66 en présence de dipentaérythritol ou DPE (teneur en « structure DPE » cible de 3 % en poids dans le polyamide final)

Dans un réacteur de polymérisation sont introduits 150 g (0,572 mol) de sel N (sel 1:1 d'hexaméthylène diamine et d'acide adipique), 4.0 g de dipentaerythritol (0,016 mol), 1,1g d'acide adipique (0,008 mol, soit 117 méq/kg de polyamide), 136,3 g d'eau déminéralisée et 2 g d'un agent antimousse. Le polyamide 66 polymérisé en présence de DPE est fabriqué selon un procédé standard de polymérisation de type polyamide 66, avec 30 minutes de finition à 272°C. Le polymère obtenu est coulé sous forme de jonc, refroidi et mis sous forme de granulé par coupe des joncs.

Le polymère obtenu présente les caractéristiques suivantes : GTC = 80,2 meq/kg, GTA = 55,8 meq/kg. Le PA 66 polymérisé en présence de DPE présente ΔGT=GTC-GTA= 24,4 meq/kg. Le PA 66 de l'exemple comparatif 1, polymérisé sans DPE ni compensation en acide adipique présente ΔGT=GTC-GTA=42 meq/kg, ce qui indique que l'alcool polyhydrique a réagi partiellement par l'intermédiaire de ses fonctions hydroxyle avec les fonctions acide de l'acide adipique, à la hauteur de 117+42-24,4= 135 meq/kg. Similairement au calcul de l'exemple 1, la fraction molaire moyenne de fonctions hydroxyle de l'alcool polyhydrique ayant réagi est 135/721=19%. Si on considère une equi-réactivité des fonctions hydroxyles, cela signifie qu'en moyenne 1,1 fonctions hydroxyles par DPE a réagi et 0,7 fonction hydroxyle par MPE a réagi. En moyenne, cela signifie que la totalité du DPE est lié et que 70% du MPE est lié chimiquement au polyamide.

### Exemple 9 : Préparation d'un PA 66 en présence de tripentaérythritol ou TPE (teneur en « structure TPE » cible de 3 % en poids dans le polyamide final)

Dans un réacteur de polymérisation sont introduits 150 g (0,572 mol) de sel N (sel 1:1 d'hexaméthylène diamine et d'acide adipique), 4.0 g de tripentaerythritol (0,011 mol), 0,8g d'acide adipique (0,005 mol, soit 80 meq/kg de PA), 136,3 g d'eau déminéralisée et 2 g d'un agent antimousse. Le polyamide 66 polymérisé en présence de tripentaérythritol (TPE, Aldrich) est fabriqué selon un procédé standard de polymérisation de type polyamide 66, avec 30 minutes de finition à 272°C. Le polymère obtenu est coulé sous forme de jonc, refroidi et mis sous forme de granulé par coupe des joncs.

Le polymère obtenu présente les caractéristiques suivantes: GTC = 76,1 meq/kg, GTA = 60,4 meq/kg. Le PA 66 polymérisé en présence de TPE présente ΔGT=GTC-GTA= 15,7 meq/kg. Le PA 66 de l'exemple comparatif 1, polymérisé sans TPE ni compensation en acide adipique présente ΔGT=GTC-GTA=42 meq/kg, ce qui indique que l'alcool polyhydrique a réagi partiellement par l'intermédiaire de ses fonctions hydroxyle avec les fonctions acide de l'acide adipique, à la hauteur de 80+42-15,7= 107 meq/kg. Similairement au calcul de l'exemple 1, la fraction molaire moyenne de fonctions hydroxyle de l'alcool polyhydrique ayant réagi est 107/642= 17%. Si on considère une equi-réactivité des fonctions hydroxyles, cela signifie qu'en moyenne 1,3 fonctions hydroxyles par TPE a réagi. En moyenne, cela signifie que la totalité du TPE est lié chimiquement au polyamide.

## Revendications

1. Utilisation d'un alcool polyhydrique comportant au moins 3 groupements hydroxyles de formule (I) représenté par la formule :
R-(OH)n (I)
- n est compris entre 3 et 8
- R est un radical hydrocarboné aliphatique ou cycloaliphatique, substitué ou non, comprenant éventuellement des hétéroatomes tels que N, S, O et/ou P,
lors d'un procédé de polymérisation du polyamide pour conférer au polyamide modifié obtenu une augmentation de la stabilité vis-à-vis de la chaleur.

2. Utilisation selon la revendication 1, **caractérisée en ce que** l'on utilise de 0,05 à 20 % en poids d'alcool polyhydrique par rapport au poids total du polyamide.

3. Utilisation selon l'une quelconque des revendications 1 à 2, **caractérisée en ce que** l'on utilise de 0,05 à 20 % en poids d'alcool polyhydrique par rapport au poids total de la composition.

4. Utilisation selon l'une quelconque des revendications 1 à 3, **caractérisée en ce que** la proportion molaire de composé d'alcool polyhydrique lié de manière covalente au polyamide est comprise entre 10 et 100 %.

5. Utilisation selon l'une quelconque des revendications 1 à 4, **caractérisée en ce que** l'alcool polyhydrique est choisi dans le groupe comprenant : le glycérol, le trimethylolpropane, le 2,3-di-(2'-hydroxyethyl)-cyclohexan-1-ol, l'hexane-1,2,6-triol, le 1,1,1-tris-(hydroxymethyl)ethane, le 3-(2'-hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le di-trlmethylopropane, l'ethoxylate de trimethylolpropane, ou le propoxylate de trimethylolpropane ; le pentaerythritol, le dipentaerythritol, le trlpentaerythritol, la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, Pallitol, l'altritol, le gulitol, l'erythritol, le threitol, et le D-gulonlque-y-lactone, et
en particulier parmi le glycérol, le trimethylolpropane, le 2,3-di-(2'-hydroxyethyl)- cyclohexan-1-ol, l'hexane-1,2,6-triol, le 1,1,1-tris-(hydroxymethyl)ethane, le 3-(2'- hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le di-trimethylopropane, l'ethoxylate de trimethylolpropane, ou le propoxylate de trimethylolpropane ; le pentaerythritol, le dipentaerythritol, le tripentaerythritol, la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, l'allitol, l'altritol, le gulitol, l'erythritol, le threitol, et le D-gulonique-y-lactone.

6. Utilisation selon l'une quelconque des revendications 1 à 5, **caractérisée en ce que** l'alcool polyhydrique comporte une ou plusieurs fonctions amine.

7. Utilisation selon la revendication 6, **caractérisée en ce que** l'alcool polyhydrique est le tris(hydroxyméthyle) amino méthane et/ou un de ses sels.

8. Utilisation selon l'une quelconque des revendications 1 à 7, **caractérisée en ce que** le polyamide est un polyamide semi-cristallin présentant une viscosité apparente en fondu du polyamide comprise entre 0,5 et 1200 Pa.s, mesurée selon la norme ISO 11443 à un taux de cisaillement de 1000 s⁻¹ à une température égale à 20°C au-dessus de la température de fusion du polyamide.

9. Utilisation selon l'une quelconque des revendications 1 à 8, **caractérisée en ce que** l'alcool polyhydrique est ajouté au mélange des monomères constitutifs du polyamide.

10. Utilisation selon l'une quelconque des revendications 1 à 8, **caractérisée en ce que** l'alcool polyhydrique est introduit en fin de polymérisation.

11. Utilisation selon l'une quelconque des revendications 1 à 8, **caractérisée en ce que** l'alcool polyhydrique est introduit en veine fondue juste avant la vidange du réacteur de polyamidification.

## Patentansprüche

1. Verwendung eines mehrwertigen Alkohols mit mindestens 3 Hydroxylgruppen der Formel (I), die durch die Formel:
R-(OH)n (I)
wiedergegeben wird,
- n zwischen 3 und 8 liegt,
- R für einen substituierten oder unsubstituierten aliphatischen oder cycloaliphatischen Kohlenwasserstoffrest, der gegebenenfalls Heteroatome wie N, S, 0 und/oder P umfasst, steht,
bei einem Polyamid-Polymerisationsverfahren zur Erhöhung der Wärmestabilität des erhaltenen modifizierten Polyamids.

2. Verwendung nach Anspruch 1, **dadurch gekennzeichnet, dass** man 0,05 bis 20 Gew.-% mehrwertigen Alkohol, bezogen auf das Gesamtgewicht des Polyamids, verwendet.

3. Verwendung nach einem der Ansprüche 1 bis 2, **dadurch gekennzeichnet, dass** man 0,05 bis 20 Gew.-% mehrwertigen Alkohol, bezogen auf das Gesamtgewicht der Zusammensetzung, verwendet.

4. Verwendung nach einem der Ansprüche 1 bis 3, **dadurch gekennzeichnet, dass** der molare Anteil an mehrwertiger Alkoholverbindung, die kovalent an das Polyamid gebunden ist, zwischen 10 und 100 % liegt.

5. Verwendung nach einem der Ansprüche 1 bis 4, **dadurch gekennzeichnet, dass** der mehrwertige Alkohol aus der Gruppe umfassend Glycerin, Trimethylolpropan, 2,3-Di(2'-hydroxyethyl)cyclohexan-1-ol, Hexan-1,2,6-triol, 1,1,1-Tris(hydroxymethyl)ethan, 3-(2'-Hydroxyethoxy)propan-1,2-diol, 3-(2'-Hydroxypropoxy)propan-1,2-diol, 2-(2'-Hydroxyethoxy)hexan-1,2-diol, 6-(2'-Hydroxypropoxy)hexan-1,2-diol, 1,1,1-Tris[(2'-hydroxyethoxy)methyl]ethan, 1,1,1-Tris[(2'-hydroxypropoxy)methyl]propan, Ditrimethylolpropan, Trimethylolpropanethoxylat oder Trimethylolpropanpropoxylat; Pentaerythritol, Dipentaerythritol, Tripentaerythritol, Cyclodextrin, D-Mannose, Glucose, Galactose, Saccharose, Fructose, Xylose, Arabinose, D-Mannitol, D-Sorbitol, D- oder L-Arabitol, Xylitol, Iditol, Talitol, Allitol, Altritol, Gulitol, Erythritol, Threitol und D-Gulonsäure-γ-lacton und
insbesondere aus Glycerin, Trimethylolpropan, 2,3-Di-(2'-hydroxyethyl)cyclohexan-1-ol, Hexan-1,2,6-triol, 1,1,1-Tris(hydroxymethyl)ethan, 3-(2'-Hydroxyethoxy)propan-1,2-diol, 3-(2'-Hydroxypropoxy)propan-1,2-diol, 2-(2'-Hydroxyethoxy)-hexan-1,2-diol, 6-(2'-Hydroxypropoxy)hexan-1,2-diol, 1,1,1-Tris[(2'-hydroxyethoxy)methyl]ethan, 1,1,1-Tris[(2'-hydroxypropoxy)methyl]propan, Ditrimethylpropan, Trimethylolpropanethoxylat oder Trimethylolpropanpropoxylat; Pentaerythritol, Dipentaerythritol, Tripentaerythritol, Cyclodextrin, D-Mannose, Glucose, Galactose, Saccharose, Fructose, Xylose, Arabinose, D-Mannitol, D-Sorbitol, D- oder L-Arabitol, Xylitol, Iditol, Talitol, Allitol, Altritol, Gulitol, Erythritol, Threitol und D-Gulonsäure-γ-lacton ausgewählt ist.

6. Verwendung nach einem der Ansprüche 1 bis 5, **dadurch gekennzeichnet, dass** der mehrwertige Alkohol eine oder mehrere Aminfunktionen enthält.

7. Verwendung nach Anspruch 6, **dadurch gekennzeichnet, dass** es sich bei dem mehrwertigen Alkohol um Tris(hydroxymethyl)aminomethan und/oder ein Salz davon handelt.

8. Verwendung nach einem der Ansprüche 1 bis 7, **dadurch gekennzeichnet, dass** es sich bei dem Polyamid um ein teilkristallines Polyamid mit einer gemäß ISO-Norm 11443 bei einer Scherrate von 1000 s⁻¹ und einer Temperatur, die 20 °C über dem Schmelzpunkt des Polyamids liegt, gemessenen scheinbaren Schmelzeviskosität des Polyamids zwischen 0,5 und 1200 Pa.s handelt.

9. Verwendung nach einem der Ansprüche 1 bis 8, **dadurch gekennzeichnet, dass** der mehrwertige Alkohol der Mischung der Aufbaumonomere des Polyamids zugegeben wird.

10. Verwendung nach einem der Ansprüche 1 bis 8, **dadurch gekennzeichnet, dass** der mehrwertige Alkohol am Ende der Polymerisation eingetragen wird.

11. Verwendung nach einem der Ansprüche 1 bis 8, **dadurch gekennzeichnet, dass** der mehrwertige Alkohol als schmelzflüssiger Strom unmittelbar vor der Entleerung des Polyamidierungsreaktors eingetragen wird.

## Claims

1. Use of a polyhydric alcohol comprising at least three hydroxyl groups of formula (I) represented by the formula:
R-(OH)n (I)
- n is between 3 and 8,
- R is a substituted or unsubstituted aliphatic or cycloaliphatic hydrocarbon-based radical, optionally comprising heteroatoms such as N, S, 0 and/or P,
in a polyamide polymerization process to give the modified polyamide obtained increased stability toward heat.

2. Use according to Claim 1, **characterized in that** from 0.05% to 20% by weight of polyhydric alcohol is used relative to the total weight of the polyamide.

3. Use according to either one of Claims 1 and 2, **characterized in that** from 0.05% to 20% by weight of polyhydric alcohol is used relative to the total weight of the composition.

4. Use according to any one of Claims 1 to 3, **characterized in that** the mole proportion of polyhydric alcohol compound covalently bonded to the polyamide is between 10% and 100%.

5. Use according to any one of Claims 1 to 4, **characterized in that** the polyhydric alcohol is chosen from the group comprising: glycerol, trimethylolpropane, 2,3-bis(2'-hydroxyethyl)cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)propane-1,2-diol, 2-(2'-hydroxyethoxy)hexane-1,2-diol, 6-(2'-hydroxypropoxy)hexane-1,2-diol, 1,1,1-tris[(2'-hydroxyethoxy)methyl]ethane, 1,1,1-tris[(2'-hydroxypropoxy)methyl]propane, di(trimethylolpropane), trimethylolpropane ethoxylate, or trimethylolpropane propoxylate; pentaerythritol, dipentaerythritol, tripentaerythritol, cyclodextrin, D-mannose, glucose, galactose, sucrose, fructose, xylose, arabinose, D-mannitol, D-sorbitol, D- or L-arabitol, xylitol, iditol, talitol, pallitol, altritol, gulitol, erythritol, threitol and D-gulonic-γ-lactone, and in particular from glycerol, trimethylolpropane, 2,3-bis(2'-hydroxyethyl)cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)propane-1,2-diol, 2-(2'-hydroxyethoxy)hexane-1,2-diol, 6-(2'-hydroxypropoxy)hexane-1,2-diol, 1,1,1-tris[(2'-hydroxyethoxy)methyl]ethane, 1,1,1-tris[(2'-hydroxypropoxy)methyl]propane, di(trimethylolpropane), trimethylolpropane ethoxylate, or trimethylolpropane propoxylate; pentaerythritol, dipentaerythritol, tripentaerythritol, cyclodextrin, D-mannose, glucose, galactose, sucrose, fructose, xylose, arabinose, D-mannitol, D-sorbitol, D- or L-arabitol, xylitol, iditol, talitol, allitol, altritol, gulitol, erythritol, threitol and D-gulonic-γ-lactone.

6. Use according to any one of Claims 1 to 5, **characterized in that** the polyhydric alcohol contains one or more amine functions.

7. Use according to Claim 6, **characterized in that** the polyhydric alcohol is tris(hydroxymethyl)aminomethane and/or a salt thereof.

8. Use according to any one of Claims 1 to 7, **characterized in that** the polyamide is a semicrystalline polyamide with an apparent melt viscosity of the polyamide of between 0.5 and 1200 Pa.s, measured according to standard ISO 11443 at a shear rate of 1000 s⁻¹ at a temperature equal to 20°C above the melting point of the polyamide.

9. Use according to any one of Claims 1 to 8, **characterized in that** the polyhydric alcohol is added to the mixture of monomers constituting the polyamide.

10. Use according to any one of Claims 1 to 8, **characterized in that** the polyhydric alcohol is added at the end of the polymerization.

11. Use according to any one of Claims 1 to 8, **characterized in that** the polyhydric alcohol is added as a molten stream just before emptying the polyamidation reactor.
